(19) **Europäisches Patentamt**

**European Patent Office**

**Office européen des brevets**

(11) **EP 0 810 409 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int Cl.[7]: **F24J 2/06**, F21S 11/00

(21) Anmeldenummer: **97108123.7**

(22) Anmeldetag: **20.05.1997**

(54) **Anordnung für Lichtleitsystem**

Lightconducting device system

Dispositif pour système de conduit de lumière

(84) Benannte Vertragsstaaten:
**AT BE CH DE DK FR GB IT LI NL**

(30) Priorität: **21.05.1996 DE 19620406**

(43) Veröffentlichungstag der Anmeldung:
**03.12.1997 Patentblatt 1997/49**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder: **Goetzberger, Adolf, Prof. Dr.
79249 Merzhausen (DE)**

(56) Entgegenhaltungen:
**WO-A-89/05463**

- **SOLAR ENERGY, Bd. 56, Nr. 3, März 1996, OXFORD GB, Seiten 285-300, XP000580668 M.BRUNOTTE ET AL: "TWO-STAGE CONCENTRATOR PERMITTING CONCENTRATION FACTORS UP TO 300% WITH ONE-AXIS TRACKING"**

## Beschreibung

### Stand der Technik

Die Erfindung betrifft eine Anordnung für Lichtleitsysteme, die ein Reflexionsvermögen von nahezu 100 % hat und damit geeignet ist, Tageslicht weit in das Innere von Gebäuden zu leiten.

In der Architektur wird heute vermehrt die Bedeutung des Tageslichts für die Energieeinsparung aber auch für das Wohlbefinden der darin Wohnenden oder Beschäftigten erkannt. Während man die direkte Sonnenstrahlung verhältnismäßig einfach bündeln und fortleiten kann, ist dies bei diffusem Tageslicht viel schwieriger, da es sich wegen seiner höheren Entropie nicht konzentrieren läßt. Andererseits hat in gemäßigten Klimazonen das diffuse Licht viel größere Bedeutung, da es mit größerer Häufigkeit auftritt. Infolgedessen zielen die meisten Maßnahmen zur Tageslichtnutzung auf die Verbesserung der Beleuchtung mit diffusem Licht. Wegen der erwähnten Eigenschaften des diffusen Lichts sind daher große Fensterflächen oder sonstige Verglasungen notwendig, wie sie die heutige Solararchitektur auszeichnen.

Der Stand der Technik ist in vielen Publikationen über neuere Architektur, z. Beispiel im dem Tagungsbericht über die Tagung "Solar Energy in Architecture and Urban Planning" Berlin 1996, herausgegeben von Thomas Herzog beschrieben.

Die Möglichkeiten der Tageslichtbeleuchtung beschränken sich auf Zonen in der Nähe der Gebäudeoberfläche in nicht zu großer Entfernung von verglasten Flächen. Strukturierung der Gebäudegrundrisse in Form von Atrien und Innenhöfen sind weitere Möglichkeiten, Licht ins Innere von Gebäuden zu bringen.

Eine weitere Möglichkeit, die heute noch wenig genutzt wird, stellen Lichtschächte dar. Darunter versteht man allseits verspiegelte Schächte, die Licht weit ins Innere von Gebäuden transportieren können. Lichtschächte dürfen einerseits keine große Fläche in Anspruch nehmen und sollen andererseits möglichst effektiv das Licht über größere Entfernungen fortleiten.

Der wesentliche Grund für die geringe Akzeptanz der Lichtschächte liegt im nicht ausreichenden Reflexionsfaktor der dafür verfügbaren Materialien. Für die effektive Weiterleitung von diffusem Licht sind nämlich Reflexionsfaktoren, die nahe bei 1 liegen, erforderlich. Das macht folgendes Beispiel deutlich:

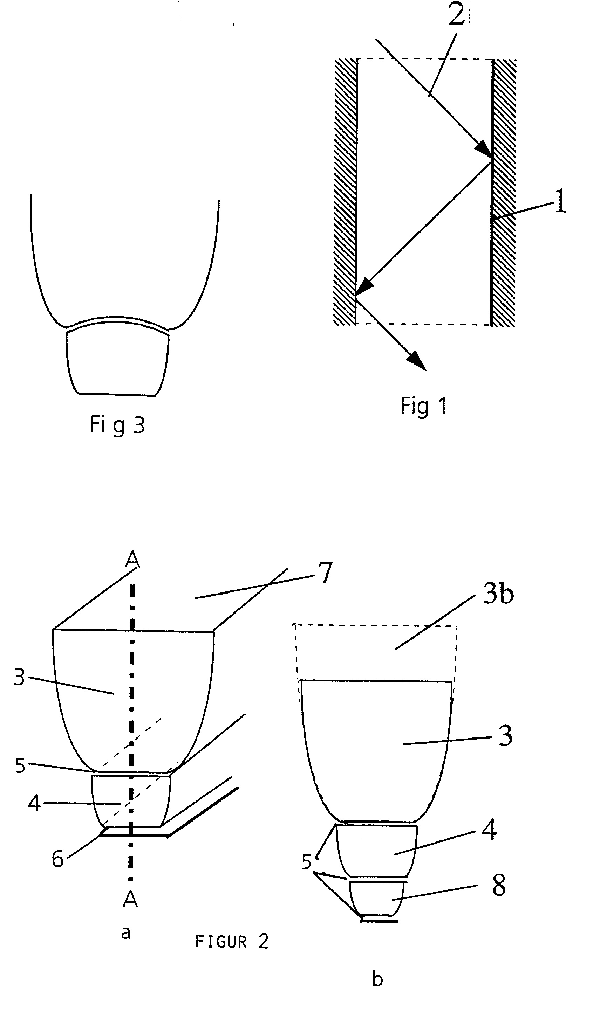

Fig. 1 zeigt einen rechteckigen Schacht im Schnitt. Die Begrenzungsfläche 1 mögen den Reflexionsfaktor $\rho$ haben.

2 stellt einen Lichtstrahl dar, der unter 45° einfällt. Die Intensität I in Abhängigkeit von der Längenkoordinate x ist gegeben durch die Beziehung:

$$I = I_o \rho^{x\,tg\,\alpha}$$

Wo Io = Anfangsintensität, $\alpha$ = Einfallswinkel.

Spiegelnde Reflektoren beruhen auf Metallschichten, die maximal einen Reflexionsgrad von 95 % erreichen, der aber nur bei sehr guten Schichten realisierbar ist. Übliche Aluminiumfolien haben etwa 90 % Reflexion. Diffuses Licht hat näherungsweise eine isotrope Verteilung, d.h. alle Richtungen sind gleichwertig vertreten. Bei Leitung durch einen Lichtschacht erleiden die flach einfallenden Strahlen viel mehr Reflexion als die steil einfallenden und werden somit schneller abgeschwächt. Das Maximum der Intensität dieser Strahlung liegt bei 45°. Für diese Richtung hat sich nach obiger Formel ein Strahl in der Schnittebene bei $\rho$ = 0,9 in einer Tiefe von 6,5 $*a$ (a = Schachtbreite) auf die Hälfte der Intensität abgeschwächt. Bessere Reflexionsgrade erhält man bei weißen Oberflächen, die diffus reflektieren, aber diese sind nicht für die Lichtleitung brauchbar, da sie das Licht nach allen Richtungen, also auch nach rückwärts reflektieren. Die besten Reflexionswerte hat die Totalreflexion, die im Prinzip, d.h. bei glatten Oberflächen verlustfrei erfolgt. Einen Ansatz in diese Richtung bilden prismenförmig strukturierte Folien, die heute schon für Lichtleitung eingesetzt werden. Sie weisen jedoch Totalreflexion nur in einem sehr engen Winkelbereich auf und sind daher nicht sehr effektiv.

Aufgabe der Erfindung ist es, die Reflexionsverluste zu vermeiden. Erfindungsgemäß wird dies erreicht durch die Anordnung nach Anspruch 1. Vorteilhafte Ausgestaltungen sind in den Unteransprüchen gekennzeichnet.

### Beschreibung der Erfindung

Die Erfindung beruht auf einer Struktur, die einen sehr hohen Prozentsatz des Lichts durch Totalreflexion und einen geringen Prozentsatz durch metallische Reflexion weiterleitet. Dadurch ergeben sich Reflexionsfaktoren, die nahe bei 100 % liegen und somit bisher nicht mögliche Lichtleitprobleme realisierbar machen. Die grundlegende Struktur ist ähnlich zu der in Anmeldung DE-P 196 13 222.3 beschriebenen, dient aber einem anderen Zweck und ist demzufolge anders optimiert. Dort wird ein CPC (Compound Parabolic Concentrator) benützt, um das aus einem begrenzten Bereich des Himmels kommende direkte Sonnenlicht zu reflektieren und alles andere Licht durchzulassen, während in der hier beschriebenen Erfindung alles Licht mit möglichst hoher Reflexion reflektiert werden soll. Des weiteren soll die Winkelkomponente in Lichtfortpflanzungsrichtung erhalten bleiben. Dazu dient die in Fig. 2 gezeigte Struktur. 3 ist ein CPC, der aus einem brechenden Medium besteht und einen ausreichend großen Akzeptanzwinkel hat. Bei CPCs, die aus einem brechenden Medium bestehen, ist zu beachten, daß für flach einfallende Strahlen der Akzeptanzwinkel in Richtung senkrecht zur Trogachse dem Designwinkel entspricht, daß aber in Trogrichtung dieser Winkel immer 90° beträgt, d.h. es werden alle Strahlen akzeptiert. Daher fällt bei einem Akzeptanzwinkel von 45 °, 82 % des ankommenden Lichts (bei diffuser Anfangsverteilung) in den Akzeptanzbereich. Für einen Akzeptanzwinkel von 55° ist der Anteil 93 %. Günstig wirkt sich ferner aus, daß die maximalen Verluste für flache Winkel in Bezug zur Lichtleitrichtung auftreten, also für Winkel, bei denen die Strahlen maximal geschwächt werden. Der erste Konzentrator braucht daher nicht den vollen Akzeptanzwinkel zu haben, was sich günstig auf die Funktion und Materialauswahlmöglichkeiten auswirkt. Des weiteren ist dieser Konzentrator so ausgelegt, daß alle vorkommenden Reflexionen die Bedingung der Totalreflexion erfüllen. Diese Bedingung lautet: $\cos(\Theta; + \Theta_o) \geq (2/n^2)-1$, wobei $\Theta$; und $\Theta_o$ Eintrittswinkel und Austrittswinkel innerhalb des Konzentrators bedeuten, n ist der Brechungsindex. Da die ideale Form des Konzentrators sehr lang ist, kann man mit nur geringem Einfluß auf den Konzentrationsfaktor eine verkürzte Version verwenden, bei der der wenig gekrümmte Teil 3b weggelassen wird (s. Fig. 2b).

Das sich verjüngende Ende des Konzentrators ist durch einen Luftspalt 5 vom nächsten Element getrennt. An dieser Fläche wird ein Teil der Strahlung durchgelassen und ein anderer Teil durch Totalreflexion zurückreflektiert. Der zurückreflektierte Teil hängt stark vom Brechungsindex ab. Je höher der Brechungsindex, desto mehr Licht wird an dieser Grenzfläche reflektiert. Durch weitere ähnliche Elemente 4 und 8 (Bild 2b) wird das Licht weiter konzentriert und somit der Anteil des durchgelassenen Lichts beliebig klein gemacht, da der metallische Reflektor 6 nur einen relativ schlechten Wirkungsgrad aufweist. Ein Vorteil der Anordnung ist, daß die weiteren Elemente immer kleiner werden und daher weniger Material verbrauchen. Das ist von Bedeutung, weil Materialien höheren Brechungsgrades teurer sind. Das Ende bildet ein metallischer Reflektor, der dann nur noch das verbleibende Licht reflektiert. Die Luftspalte zwischen den Stufen müssen möglichst eng sein, das von den begrenzten Flächen ausgehende Licht erfüllt den ganzen Halbraum. Um Lichtverluste zu reduzieren, könnten auch die Luftspalte leicht gekrümmt ausgeführt werden, wie in Fig. 3 gezeigt. Die Luftspalte sind wichtig, weil dadurch mehrere Konzentratoren hintereinander geschaltet werden können und sich dadurch der Konzentrationsfaktor multiplizert. Im Gegensatz zum ersten Konzentrator sollen die folgenden Elemente einen Akzeptanzwinkel von nahe 90 % haben.

Unter der Voraussetzung, daß die Totalreflexion verlustfrei ist, errechnet sich der Reflexionsfaktor für die gesamte Anordnung zu $R = (1-L) + LR_M$ wo L die durch den letzten Konzentrator emittierte Lichtintensität und $R_M$ die Reflexionskonstante des Metalls des Reflektors 6 bedeuten. Für ein Beispiel sei ein erstes Element mit n =1,58 (Polycarbonat) und ein zweites Element mit n =1,8 angenommen. (Plastikmaterialien mit n = 1,8 sind verfügbar, da sie für Brillen eingesetzt werden). In diesem Fall ist L etwa 0,2. Mit $R_M$ =0,9 ergibt sich R=0,98, also ein Reflexionsfaktor, der weit über dem für spiegelnden Reflexion bisher Erreichten liegt. Damit wird die Reichweite für unter 45° einfallendes Licht vom 6,5 fachen bei R=0,9 auf das 34,3 fache erhöht. Entsprechend höhere Werte lassen sich mit weiteren Stufen erzielen.

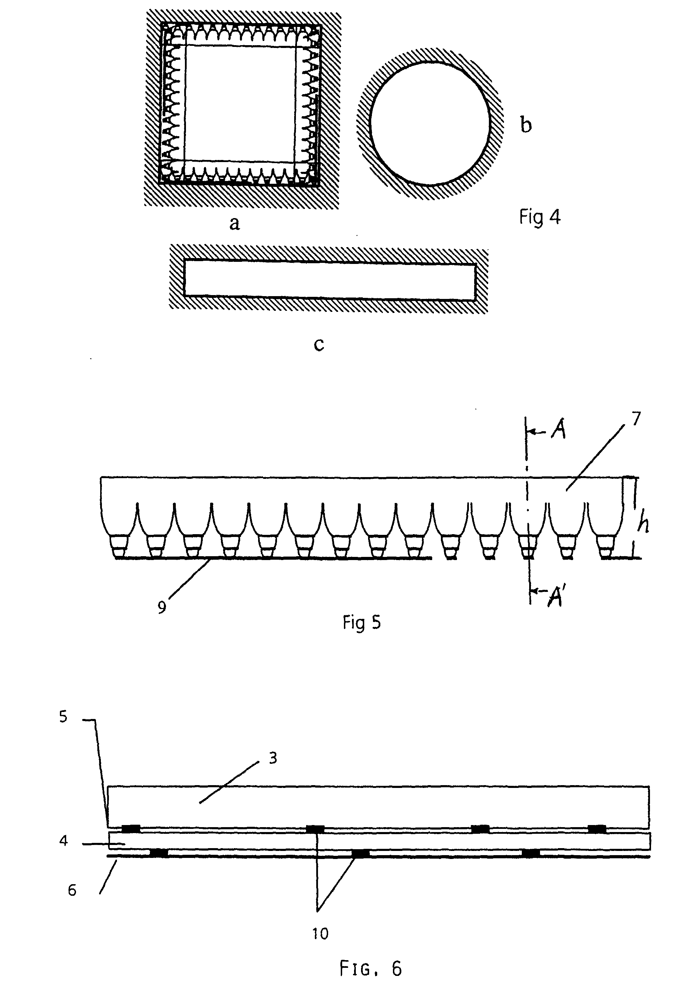

Mit solch hohen Reflexionswerten kann man nun Licht tief in das Innere von Gebäuden leiten. Man erhält auch mehr Spielraum für die Form der Lichtschächte. Bisher war man auf kreisförmige oder annähernd quadratische Formen, wie in Fig. 4a und 4b beschränkt. Bei sehr hoher Reflexion werden auch flache Schächte, wie in 4c, in denen viel mehr Reflexionen stattfinden, realisierbar. Offensichtlich sind solche Formen in Gebäuden leichter unterzubringen. Jedoch muß die gesamte Fläche groß genug sein, damit genügend Licht für den Schacht eingefangen werden kann.

Aus wirtschaftlichen Erwägungen kann der Lichtschacht auch nicht mit allen Flächen, bei einem rechteckigen Schacht also die vier Flächen des Schachtes, mit den Konzentratortrögen belegt sein. Gerade bei flachen Schächten müssen nur die breiten Flächen mit den Konzentratoren belegt sein. Für die schmalen Flächen eines solchen Schachtes sind u.U. normale metallische Reflektoren noch tragbar. Die Lichtschächte selbst wird man der Einfachheit halber parallel zu den normalen Gebäudewänden anordnen. So können z.B. die Lichtschächte durchaus waagerecht liegen, z.B. wäre es denkbar, Gänge mit derartigen Flächen zu belegen, um das Tageslicht in Gänge zu leiten.

Es ist weiterhin auch denkbar, daß man z.B. Teile von Treppenaufgängen mit derartigen Lichtleitflächen versieht, ebenso z.B. die Kellertreppenwände, sodaß das durch die normalen Stiegenfenster einfallende Licht auch in den Keller geleitet wird. Auf jeden Fall ist es nicht nötig, daß die Anordnungen nach der Erfindung die Flächen eines Raumes vollständig belegen.

Eine interessante Eigenschaft der erfindungsgemäßen Elemente ist, daß sie in der Lichtfortpflanzungsrichtung spiegelnd wirken, aber in der Richtung senkrecht dazu lichtstreuend sind. Dadurch eignen sie sich besonders für die Auskleidung von Atrien, wo Blendungserscheinungen vermieden werden sollen.

Die Funktion der Konzentration ist nicht von der Größe abhängig. Daher kann man die Strukturen sehr klein machen, wodurch der Materialbedarf reduziert wird. Eine Grenze stellt der Verlust an Luftspalten zwischen den Konzentratorelementen bei zu kleinen Dimensionen dar. Die Elemente der ersten Stufe können ohne Beeinträchtigung der Funktion durch eine gemeinsame transparente Deckplatte 7 zusammengehalten werden, wie in Fig. 5 zu sehen ist. Die Deckplatte 7 ist dann die Begrenzungsfläche des Lichtschachtes. Gezeigt ist die Anordnung im Schnitt, der Lichtschacht ist dann auf den anderen Seiten ebenfalls mit der Anordnung gemäß Fig. 5 versehen, wie in Fig. 4a angedeutet. Die Reflektoren 6 können in diesem Fall auch durch eine kontinuierliche metallische Spiegelfolie 9 ersetzt werden.

Da die Luftspalte Verlustquellen darstellen, sollen sie so dünn wie möglich sein. Für ihre Funktion ist es ausreichend, wenn die Spaltbreite in der Größenordnung der Lichtwellenlänge liegt. Es genügt, wenn die zwei Flächen ohne optischen Kontakt aufeinander liegen. Daher ist eine einfache Verbindung der Elemente, wie in Fig. 6 gezeigt, möglich. Auf kleinen Flächen 10 sind die Konzentratoren 3 und 4, sowie der Spiegel 6 mit Hilfe eines durchsichtigen Klebstoffs miteinander verbunden. Die Luftspalte 5 sind in dieser Abbildung übertrieben groß gezeichnet.

**Beschreibung der Figuren**

Figur 1 zeigt die Lichtfortpflanzung in einer Schnittebene durch einen Lichtschacht mit spiegelnden Wänden 1. Es ist die Reflexion eines unter 45° eintreffenden Lichtstrahls 2 dargestellt. In dieser Richtung hat die Verteilung des diffusen Lichts ihr Intensitätsmaximum.

Figur 2a zeigt einen Schnitt - zum besseren Verständnis 3-dimensional - durch einen trogförmigen ersten Konzentrator 3, der aus einem lichtbrechenden Medium besteht und so ausgelegt ist, daß die Lichtreflexion an seinen Wänden nur durch Totalreflexion erfolgt. An seinem unteren Ende schließt sich, durch einen Luftspalt 5 getrennt, ein weiterer Konzentrator 4 an, der durch einen weiteren Luftspalt 5 und einen spiegelnden Reflektor 6 abgeschlossen wird.

Figur 2b zeigt eine ähnliche Anordnung mit einer weiteren Konzentratorstufe 8. Die Tröge der einzelnen Konzentratoren 3, 4 und 8 erstrecken sich dann vom Eingang des Lichtschachtes bis zum Ende im Gebäude. Die Tröge sind dann wie ersichtlich parallel angeordnet (s. Figur 4a und Figur 5).

Figur 3 zeigt eine Konzentratoranordnung mit gekrümmtem Luftspalt.

Figur 4 zeigt drei Querschnitte von Lichtschächten, 4a quadratisch, 4b kreisförmig und 4c ein langgestrecktes Rechteck, das für den gleichen Lichtweg wesentlich mehr Reflexionen erfordert und daher nur mit sehr hoher Reflexion der Wände realisiert werden kann.

In Figur 4a sind die Konzentratortröge im Querschnitt schematisch eingezeichnet, wobei der Maßstab natürlich falsch ist, da die Konzentratoren zwar möglicherweise so kleingemacht werden können, der Querschnitt (Figur 5) des Schachtes jedoch z.B. 0,5 - 10 m$^2$ sein kann. Die Gesamthöhe h der Konzentratoren 3, 4, 8 wird im Bereich von 0,5 - 5 cm liegen.

Figur 5 zeigt eine flächenfüllende Anordnung von Konzentratorelementen, wie sie zur Auskleidung von Lichtschächten eingesetzt werden können. 7 stellt eine gemeinsame Deckplatte dar.

Figur 6 zeigt einen Längsschnitt AA' aus Figur 5 durch die Anordnung mit den Konzentratoren 3 und 4 (ohne 8) und dem Reflektor 6. Die Punkte 10 sind Klebstellen, an denen die Elemente auf kleinen Flächen miteinander verbunden werden.

Der Lichteinfall in den Figuren 2 - 5 ist auf die Papierebene, der diffuse Lichteinfall ist dann z.B. in Figur 4 von allen Seiten des Raumes in die Fläche des Lichtschachtes und wird nach unten weitergeleitet, z.B. in das nicht dargestellte Gebäude bzw. Atrium.

Der Lichteinfall in Figur 6 kommt z.B. von links, wo die Öffnung des Lichtschachtes wäre, und wird nach rechts weitergeleitet, wo das Ende dann entweder ein beleuchteter Raum oder ein Atrium sein könnte.

**Patentansprüche**

**1.** Anordnung für Lichtleitsysteme mit sehr hohem Reflexionsgrad, bestehend aus mindestens einem parabolischen, mit lichtbrechendem Medium gefüllten trogförmigen Konzentrator (3, 4, 8), wobei die Längsachse des Trogs parallel zur Richtung des zu leitenden Lichts ausgerichtet ist, der Trog einen Akzeptanzwinkel von mindestens 45° hat und die maximale Lichtkonzentration, die mit Totalreflexion vereinbar ist, hat, und daß der Konzentrator am sich verjüngenden Ende, durch einen sehr dünnen Luftspalt (5) getrennt, einen metallischen Reflektor (6) aufweist.

**2.** Anordnung nach Anspruch 1,
**dadurch gekennzeichnet,**
daß mehrere Konzentratoren (3, 4, 8) hintereinander angeordnet und jeweils durch einen Luftspalt (5) getrennt sind.

**3.** Anordnung für Lichtleitsysteme nach Anspruch 2,
**dadurch gekennzeichnet,**
daß der oder die durch den Luftspalt (5) getrennten Konzentratoren (4, 8) aus Material eines höheren Brechungsindex bestehen, als der erste Konzentrator (3) und/oder einen Akzeptanzwinkel von nahe 90° haben.

**4.** Anordnung für Lichtleitsysteme nach den Ansprüchen 1 - 3,
**dadurch gekennzeichnet**,
daß viele trogförmige Konzentratoren (3, 4, 8) unmittelbar nebeneinander angeordnet sind und durch eine gemeinsame transparente Platte (7) miteinander verbunden sind.

**5.** Anordnung nach den Ansprüchen 1 - 4,
**dadurch gekennzeichnet**,
daß einer (3) oder mehrere der Konzentratoren gegenüber der idealen Form um den schwach gekrümmten Teil (3b) verkürzt sind.

**6.** Anordnung nach den Ansprüchen 1 - 5,
**dadurch gekennzeichnet**,
daß die durch Luftspalte (5) getrennten Konzentratoren auf Flächen, die klein sind in Bezug zur Gesamtspaltfläche miteinander sowie mit dem Reflektor (6) verbunden sind.

**7.** Anordnung nach den Ansprüchen 1 - 6, **dadurch gekennzeichnet**, daß die die Luftspalte begrenzenden Flächen eine leichte Krümmung in der Schnittebene senkrecht zur Längsachse der Tröge aufweisen.

**8.** Anordnung nach den Ansprüchen 1 - 7, **dadurch gekennzeichnet,** daß die gesamte Fläche (9) hinter den Konzentratoren metallisch reflektierend ausgebildet ist.

**9.** Anordnung nach Anspruch 4, **dadurch gekennzeichnet,** daß mehrere Flächen der trogförmigen Konzentratoren (3, 4, 8) im Winkel von 90° derart angeordnet sind, daß sie einen Schacht (Lichtschacht) bilden.

**10.** Verwendung der Anordnungen nach einem der Ansprüche 1 - 9 zur Lichtleitung in Lichtschächten von Gebäuden.

**Claims**

**1.** Array for light guiding systems having a very high degree of reflection, consisting of at least one parabolic trough-shaped concentrator (3, 4, 8) filled with a light-refracting medium, wherein the longitudinal axis of the trough is oriented in parallel with the direction of the light to be guided, the trough has an acceptance angle of at least 45° and presents the maximum light concentration compatible with light reflection, and wherein the concentrator presents a metal reflector (6), separated by a very thin air gap (5), at its tapering end.

**2.** Array according to Claim 1, **characterised in** that several concentrators (3, 4, 8) are disposed in a tandem array and are each separated by an air gap (5).

**3.** Array for light guiding systems according to Claim 2, **characterised in** that said concentrator or concentrators (4, 8) separated by said air gap are made of a material having a higher refractive index than said first concentrator (3) and/or have an acceptance angle of almost 90°.

**4.** Array for light guiding systems according to the Claims 1 to 3, **characterised in** that a great number of trough-shaped concentrators (3, 4, 8) are disposed directly beside each other and are interconnected by a common transparent plate (7).

**5.** Array according to the Claims 1 to 4, **characterised in** that one (3) or several of said concentrators are shortened, relative to the ideal shape, by said slightly curved section (3b).

**6.** Array according to the Claims 1 to 5, **characterised in** that said concentrators separated by air gaps (5) are connected to each other as well as to said reflector (6) on areas which are small relative to the total gap area.

**7.** Array according to the Claims 1 to 6, **characterised in** that the areas defining said air gaps present a slight curvature in the sectional plane orthogonal on the longitudinal axis of said troughs.

**8.** Array according to the Claims 1 to 7, **characterised in** that the total area (9) behind said concentrators presents a metal reflection configuration.

**9.** Array according to Claim 4, **characterised in** that several areas of said trough-shaped concentrators (3, 4, 8) are disposed at an angle of 90° in a form such that they form a shaft (light shaft).

**10.** Application of the arrays according to any of the Claims 1 to 9, for guiding light into light shafts of buildings.

**Revendications**

**1.** Ensemble for systèmes à guider la lumière, présentant un très haut degré de réflexion, constitué d'au moins un concentrateur parabolique sous forme de l'auge (3, 4, 8), rempli d'un milieu réfringent, dans lequel l'axe longitudinal de l'auge est orienté en parallèle au sens de la lumière à guider, ladite auge a un angle acceptation d'au moins 45° et présente le maximum de concentration de la lumière, qui est compatible avec la réflexion de la lumière, et dans lequel le concentrateur comprend un réflecteur métallique (6), qui est séparé par une fente d'air (5) très épaisse, à son extrémité en dépouille.

**2.** Ensemble selon la revendication 1, **caractérisé en ce** qu'une pluralité de concentrateurs (3, 4, 8) est disposé sous forme d'un ensemble en tandem, et que chaque concentrateur est séparé par une fente d'air (5).

**3.** Ensemble pour systèmes à guider la lumière selon la revendication 2,
**caractérisé en ce**
que ledit concentrateur ou lesdits concentrateurs (4, 8) séparé(s) par ladite fente d'air est ou sont fait(s) d'un matériau présentant un indice de réfraction plus haut que l'indice dudit premier concentrateur (3), et/ou a ou ont un angle acceptation à peu près de 90°.

**4.** Ensemble pour systèmes à guider la lumière selon les revendications 1 à 3,
**caractérisé en ce**
qu'un grand nombre de concentrateurs sous forme de l'auge (3, 4, 8) sont disposés directement l'un du côté de l'autre et sont reliés l'un à l'autre par une plaque transparente commune (7).

**5.** Ensemble selon les revendications 1 à 4,
**caractérisé en ce**
qu'un (3) ou plusieurs desdits concentrateurs sont raccourcis, relativement à la forme idéale, par ladite partie légèrement incurvée (3b).

**6.** Ensemble selon les revendications 1 à 5,
**caractérisé en ce**
que lesdits concentrateurs séparés par fentes d'air (5) sont reliés l'un à l'autre ainsi qu'audit réflecteur (6) sur des aires qui sont petites relativement à l'aire totale des fentes.

**7.** Ensemble selon les revendications 1 à 6,
**caractérisé en ce**
que les aires, qui définissent lesdites fentes d'air, présentent une légère courbure dans le plan de coupe orthogonal sur ledit axe longitudinal desdites auges.

**8.** Ensemble selon les revendications 1 à 7,
**caractérisé en ce**
que l'aire totale (9) derrière lesdits concentrateurs présente une configuration de réflexion en métal.

**9.** Ensemble selon la revendication 4,
**caractérisé en ce**
que plusieurs aires desdits concentrateurs sous forme d'auge (3, 4, 8) sont disposés à un angle de 90° dans une forme telle qu'elles constituent un puits (puits au jour).

**10.** Emploi des ensembles selon une quelconque des revendications 1 à 9, à guider de la lumière dans des puits au jour de bâtiments.

Fig 3

Fig 1

FIGUR 2

a

b

Fig 4

Fig 5

FIG. 6